# EUROPEAN PATENT SPECIFICATION

(11) **EP 0 473 722 B1**
(45) Date of publication and mention of the grant of the patent: **09.11.1994**
(21) Application number: 90909821.2
(22) Date of filing: 13.06.1990
(51) Int. Cl.: B01D 33/00

(54) **FILTER FOR CONTINUOUS FILTRATION**
FILTER FÜR KONTINUIERLICHE FILTRIERUNG
FILTRE DE FILTRATION CONTINUE

(30) Priority: 14.06.1989 SE 8902147
(43) Date of publication of application: 11.03.1992
(73) Proprietor: CAUSTEC AKTIEBOLAG, S-402 75 Göteborg (SE)
(72) Inventor: STRID, Kent, S-810 28 Järbo (SE); KARLSSON, Hans, Ake, S-776 00 Hedemora (SE); LARSSON, Per, S-774 00 Avesta (SE)
(74) Representative: Säfwenberg, Björn
(86) International application number: PCT/SE90/00413
(87) International publication number: WO 90/15655

(56) References cited:
- SE-B- 451 948

## Description

The present invention concerns a filter for continuous filtration of a liquid by means of at least one filter element particularly but not exclusively adapted to be used as a filter in a causticising process.

According to the present invention a filter as claimed in claim 1 is provided. In US-A-4 695 381 (SE-B-451 948) a filter with the features of the preamble of claim 1 is disclosed.

According to the present invention, by providing the means for pressurizing and the separator with said cooling device and the outlet means for condensate a row of advantages is achieved as compared to filters according to previously known art. Thus, a higher concentration of filtrated liquid (filtrate) is enabled in that a substantial part of the washing liquid (water) supplied for the above mentioned washing, otherwise diluting the filtrated liquid, is withdrawn by the condensation. Further, an improved separation of vapour in condensate and gas is obtained involving the advantage that a smaller amount of gas has to be added to the filter system which in turn involves the advantage of less risk of oxidation in the system of the medium passing through the filter system. In certain cases condensate can be brought back to the washing device which thus means it would not be necessary to supply washing liquid and also may result in a simplified structure. Further, a higher capacity is enabled in that a higher revolutionary speed of the filter element is possible.

Summing up, as the most essential advantages of the present invention are enabled optimum expelling of gas from the filtrated liquid and also an optimum expelling of washing liquid.

In one embodiment of the present invention there is also suitably provided a conduit between the gas space of the separator and the gas space of the vessel for recirculating gas to the gas space of the vessel, in said gas conduit being provided said means for generating said overpressure and said lower pressure. This results in a simple embodiment for obtaining said overpressure and said lower pressure and also a simple realization for adaption therebetween, especially when in a development of this embodiment said pressure generating means is divided in at least two pressure generating means separated along the gas conduit, at least said means provided closest to the separator generating said lower pressure in said space within said filter element and a subsequent means increasing the pressure for obtaining the overpressure existing in the gas space of the vessel. In this last mentioned embodiment prevailing atmospheric pressure may be preferably at a point between said pressure generating means for obtaining said lower pressure and said overpressure, respectively. To the higher concentration of filtrated liquid contributes also a preferred embodiment wherein the filter element comprises at least one disc element mounted on a substantially horizontal shaft and wherein said washing device is arranged for washing only of a zone of the disc element located closest to the shaft substantially concentric relative thereto and wherein said lower pressure at least substantially solely prevails over said washing zone.

In a further preferred embodiment of the present invention the washing device is parted in at least two separated washing means for washing in at least two steps, whereby occurs an advantageous stirring of the material deposited on the outside of the filter element at the washing in the second step involving a better filtration than in embodiments according to known art having only one washing means.

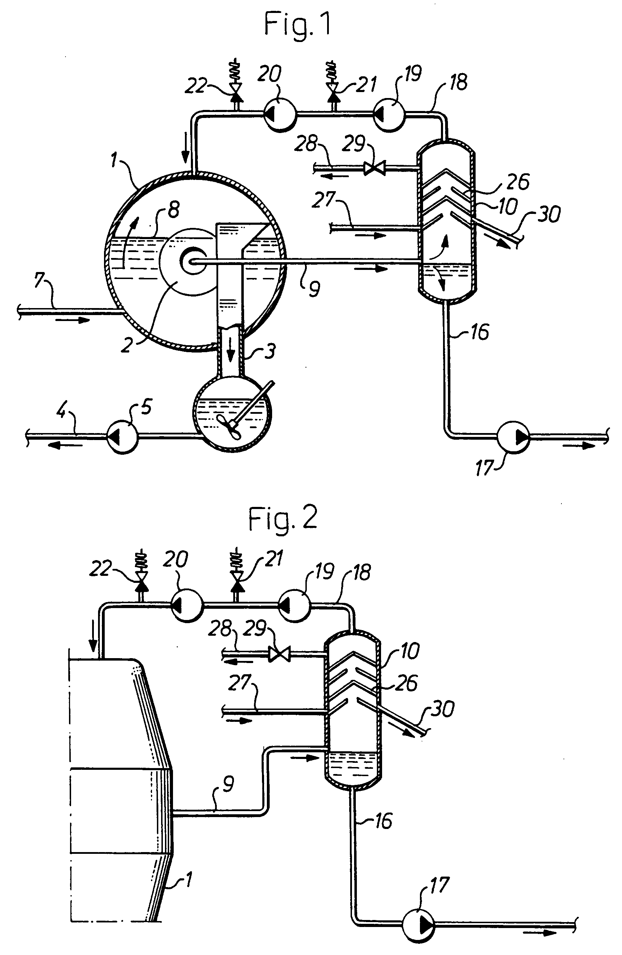

The above mentioned and other advantages of the present invention will be apparent from the following description of embodiments of filters according to the present invention, reference being made to the annexed drawings, wherein Fig. 1 - 4 schematically illustrate the examplified filters for illustrating elements of the invention and the function of the filters.

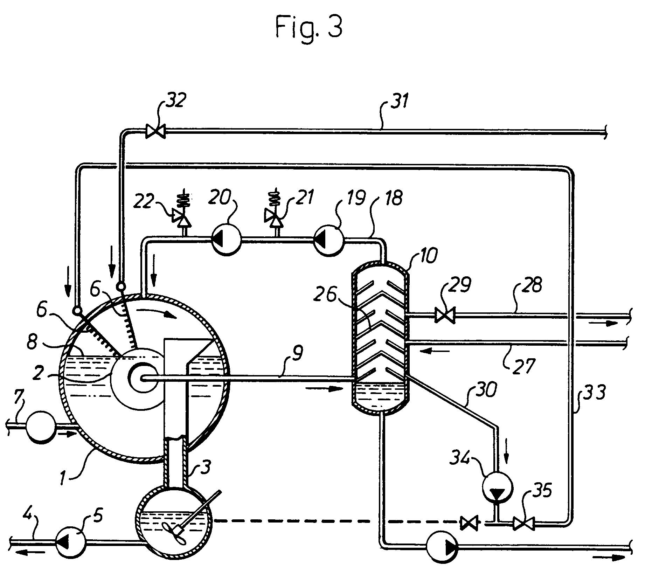

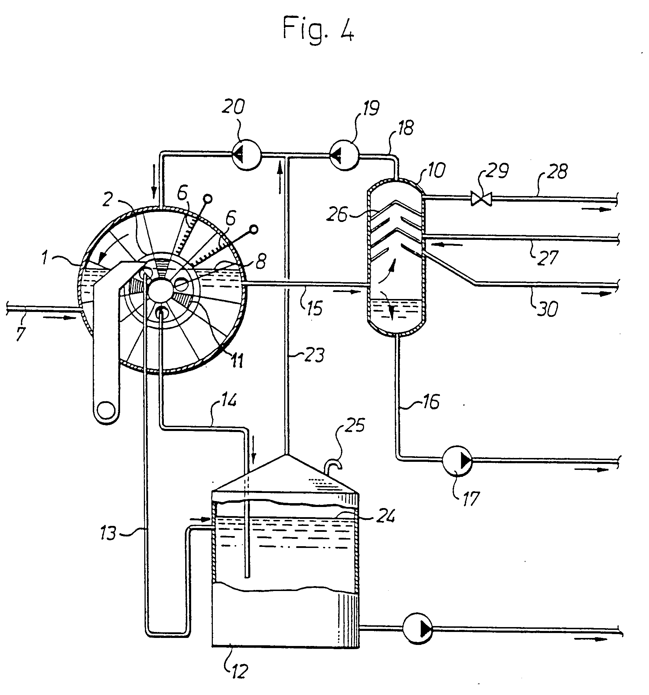

The filters shown in the drawing which in these embodiments are so-called disc filters, include like previously known disc filters a substantially cylindrical vessel 1, a center shaft 2 rotatably journal led in the vessel and a number of filter discs (not shown) arranged on the center shaft spaced from from each other, as is for instance shown in US-A-4 695 381. Each filter disc is composed of a number of disc sectors (not shown), for instance formed as is shown in US-A-4 695 381, said filter sectors in a conventional manner being composed of surrounding filter clothes and internal channels and being connected to the center shaft for discharging therethrough of filtrate and gas resulting from the filtration. The center shaft may be formed with a number of axial channels, one channel for each filter sector, as is described and shown in the above mentioned US-A-4 695 381, or may comprise one single channel common for filtrate and gas from all filter sectors of the pressure vessel as is shown in WO-A-9 010 490 (SE-B-463 601); both not pre-published. Further, as is shown in said WO-A-9 010 490, the filters may include a removing device or scraper for removal of filter cake deposited on the filter cloth at filtration and a device for removing filter cake material from the cloth located inside scraped off material, so-called precoat layer. As is shown in for instance Figs. 1 and 3 the filters further have a receiving device 3 for receiving the scraped-off filter cake material and discharge thereof through the conduit 4 by means of a pump 5, and, as is shown in Figs. 3 and 4, a washing device 6 for washing of the filter cloth. Further, the filter vessel has an inlet 7 for supplying the liquid to be filtrated and to keep the liquid at a certain level 8 in the vessel.

As is shown in Figs. 1 - 3 filtrate and gas obtained at filtration are discharged through a conduit 9 to a separator 10, whereas in the embodiment according to Fig. 4 by the arrangement of intermediate walls 11 in the center shaft 2 is obtained on one hand a prefiltrate when the filter discs pass through the liquid, said prefiltrate being discharged to a filtrate tank 12 through a conduit 13, and on the other hand a clear filtrate discharged to said filtrate tank through conduit 14 and when the filter discs pass through the space above the liquid level filtrate, washing liquid and gas discharged through conduit 15 to the separator 10.

In the separator 10 filtrate and gas are separated, the filtrate being discharged through conduit 16 by means of pump 17 and the gas being recirculated through conduit 18 to the vessel 1.

In the gas conduit 18 are arranged two blowers 19 and 20, blower 19 being adapted to generate a lower pressure in the inner of the filter discs and the blower 20 being adapted to generate an overpressure in the gas space of vessel 1 above the liquid level 8. These blowers 19, 20 constitute examples of means for obtaining the pressure difference necessary for filtration between the gas space of the vessel and the interior of the filter discs by an overpressure in the gas space of the vessel and a lower pressure in the interior of the filter discs. Hereby is created a filter having advantages only obtained in a pressure filter as well as advantages only obtained in, for instance, a vacuum filter. Hereby is obtained, for instance, a substantial conversion and cleaning of gas circulating in the filter system. Further, in comparison to pressure filters a substantially cheaper filtration vessel can be utilized. Further is enabled the use of simpler and cheaper means for generating of overpressure and underpressure, respectively, than in previously known pressure and vacuum filters, respectively. Also a faster pressurizing of the filter is enabled.

As appears from Figs. 1 - 3 a valve 21 is located between the blowers 19 and 20, and after the blower 20 a valve 22. The valve 21 is adapted to provide a pressure of substantially zero between the blowers, and the valve 22 is adapted to ensure that an excessively high pressure is not obtained in the gas space of vessel 1. In the embodiment of Fig. 4 a conduit 23 is lead from a point between blowers 19 and 20 to the space of the filtrate tank 12 above its liquid level 24, said space being ventilated to the surrounding atmosphere through conduit 25. Overpressure and lower pressure can be varied in adaption to the present filtration case. The lower pressure shall be adapted to the temperature of the filtrate in the separator 10 in order to hereby enable an optimum boiling effect of the liquid. The overpressure shall be adapted to the lower pressure such that a pressure difference over the filter element necessary and suitable for filtration is obtained. For instance, at white liquor filtration the pressure difference may be 1.0 bar, the overpressure in the gas space of vessel 1 then may be for instance between the limits 0.1 - 0.9 bar and the lower pressure in the interior of the filter discs between 0.9 - 0.1 bar.

As appears from the figures, the separator 10 is provided with a cooling device 26, in this embodiment a device cooled by cooling water, said cooling water being introduced through conduit 27 and being discharged through conduit 28 provided with valve 29. The condensate obtained at cooling is discharged through conduit 30.

Another substantial novelty of a filter according to one embodiment of the present invention is shown in Figs. 3 and 4. This novelty comprises an improved washing device referred to in Figs. 3 and 4 with numeral 6. The washing device is divided in at least two separate washing means 6, for instance spraying tubes, for washing in at least two steps. At washing in the second step occurs an advantageous stirring of the material deposited on the outside of the filter discs involving a better filtration than in previously known embodiments having only one washing means. As also appears from Figs. 3 and 4, the location of the washing means 6, as well as the location of the device 3 for receiving the scraped-off filter cake material, is depending on the rotational direction of the filter discs. Washing liquid for the washing means can either be supplied from outside, for instance as is shown, only to the first washing means 6 through conduit 31 having a valve 32, or, may condensate from the separator 10 be supplied to a washing means, for instance as is shown through conduit 33 to the second washing means 6, in this case a pump 34 being inserted in condensate conduit 30 and a valve 35 being inserted in conduit 33.

Hereinabove have been described and on the drawing have been shown disc filters. However, the invention may also concern drum filters, i.e. a filter element in the shape of a rotating drum having a surrounding filter cloth.

## Claims

1. Filter for continuous filtration of a liquid under pressure, including a vessel (1) containing said liquid to a certain level and gas in a space located above said liquid, at least one rotatable filter element provided in said vessel and defining an inner space for filtrated liquid obtained by filtration, a washing device (6) for washing of material separated from the liquid and deposited on said filter element, communication between said inner space of said filter element and outlet means from said vessel for discharging the filtrated liquid and gas brought along therewith, a separator (10) connected to said outlet for separating the filtrated liquid and the accompanying gas, means (19,20)
for providing the pressure difference between the gas space of the vessel and the inner space of the filter element necessary for filtration, said means (19,20) being provided outside said vessel for generating an overpressure in the gas space of the vessel (1) and a lower pressure in the internal space of said filter element,
and a conduit (18) arranged between the gas space of the separator (10) and the gas space of the vessel (1) for recirculating gas to the gas space of the vessel, in said gas conduit (18) being provided said means (19,20) for providing the pressure difference, characterized in that
said means (19,20) is arranged to generate such a lower pressure that the filtrated liquid is maintained in a state of evaporation within the separator, and that said lower pressure is adapted to the temperature of the filtrate in the separator (10) in order to enable a boiling effect of the liquid, and
that the separator (10) is provided with a cooling device (26) for cooling the separated gas and with outlet means (30) for discharging condensate obtained by cooling.

2. Filter according to claim 1, **characterized in** that said overpressure and said lower pressure have substantially the same value.

3. Filter according to claim 1 or 2, **characterized in** that said means (19,20) for providing the pressure difference is divided in at least two means separated along said gas conduit (18), at least said means arranged closest to the separator (10) generating said lower pressure in said space within said filter element and the subsequent means (20) increasing the pressure for obtaining the overpressure prevailing in the gas space of the vessel (1).

4. Filter according to claim 3, **characterized in** that the pressure generating means are arranged such that atmospheric pressure is prevailing at a point between said means (19,20) for providing the pressure difference for obtaining said lower pressure and said overpressure, respectively.

5. Filter according to any one of the preceding claims, wherein said filter element comprises at least one disc filter mounted on a substantially horizontal shaft, **characterized in** that said washing device (6) is adapted for washing of only one zone of the disc filter located closest to said shaft substantially concentrically relative thereto, said lower pressure prevailing at least substantially over said washing zone.

6. Filter according to any one of the preceding claims, **characterized in** that said washing device (6) is divided in at least two separated washing means for washing in at least two steps.

7. Filter according to any one of the preceding claims, **characterized in** that at least a part of the condensate obtained by cooling in said separator (10) is recirculated to the washing device.

8. Filter according to any one of the preceding claims, **characterized in** that said means (19,20) for providing the pressure difference comprise blowers.

## Patentansprüche

1. Filter zum kontinuierlichen Filtern einer Flüssigkeit unter Druck, mit einem Gefäß (1), welches die Flüssigkeit bis zu einem bestimmten Niveau und Gas in einem über dieser Flüssigkeit befindlichen Raum enthält, mindesten einem drehbaren Filterelement, das in diesem Gefäß vorgesehen ist und einen Innenraum für durch Filtration erhaltene filtrierte Flüssigkeit festlegt, einer Wascheinrichtung (6) zum Waschen von aus der Flüssigkeit abgetrenntem und am Filterelement abgelagerten Material, einer Verbindung zwischen dem Innenraum des Filterelements und Auslaßmitteln aus dem Gefäß zum Austragen von filtrierter Flüssigkeit und damit mitgenommenem Gas, einem mit dem Auslaß verbundenen Abscheider (10) zum Trennen von filtrierter Flüssigkeit und begleitendem Gas, Mitteln (19, 20) zur Schaffung des Druckunterschiedes zwischen dem Gasraum des Gefäßes und dem Innenraum des zum Filtrieren notwendigen Filterelements, wobei diese Mittel (19, 20) außerhalb des Gefäßes vorgesehen sind, um einen Überdruck im Gasraum des Gefäßes (1) und einen niedrigeren Druck im Innenraum des Filterelements zu erzeugen, und mit einer Leitung (18), die zwischen dem Gasraum des Abscheiders (10) und dem Gasraum des Gefäßes (1) zum Rezirkulieren von Gas zum Gasraum des Gefäßes angeordnet ist, wobei in dieser Gasleitung (18) diese Mittel (19, 20) zur Schaffung des Druckunterschiedes vorgesehen sind, dadurch gekennzeichnet, daß diese Mittel (19, 20) angeordnet sind, um einen solchen niedrigeren Druck zu erzeugen, daß die filtrierte Flüssigkeit im Abscheider in einem Verdampfungszustand gehalten wird, und daß der niedrigere Druck an die Temperatur des Filtrats im Abscheider (10) angepaßt ist, um eine Kochwirkung der Flüssigkeit zu ermöglichen, und daß der Abscheider (10) mit einer Kühleinrichtung (26) zum Kühlen des abgetrennten Gases und mit Auslaßmitteln (30) zum Austragen von durch das Kühlen erhaltenem Kondensat versehen ist.

2. Filter nach Anspruch 1, dadurch gekennzeichnet, daß der Überdruck und der niedrigere Druck im wesentlichen den gleichen Wert haben.

3. Filter nach Anspruch 1 oder 2, dadurch gekennzeichnet, daß die Mittel (19, 20) zur Schaffung des Druckunterschiedes in mindestens zwei Mittel geteilt sind, die entlang der Gasleitung (18) getrennt sind, wobei mindestens das dem Abscheider am nächsten angeordnete Mittel den niedrigeren Druck im Raum innerhalb des Filterelements erzeugt und das darauffolgende Mittel (20) den Druck zum Erhalt des im Gasraum des Gefäßes (1) vorherrschenden Überdrucks erhöht.

4. Filter nach Anspruch 3, dadurch gekennkzeichnet, daß die druckerzeugenden Mittel so angeordnet sind, daß atmosphärischer Druck an einer Stelle zwischen den Mitteln (19, 20) zur Schaffung des Druckunterschiedes vorherrscht, um den niedrigeren Druck bzw. den Überdruck zu erhalten.

5. Filter nach einem der vorhergehenden Ansprüche, worin das Filterelement mindestens einen auf einer im wesentlichen horizontalen Welle angebrachten Scheibenfilter umfaßt, dadurch gekennzeichnet, daß die Wascheinrichtung (6) ausgelegt ist, um nur eine Zone des Scheibenfilters zu waschen, die der Welle am nächsten, im wesentlichen konzentrisch zu dieser, angeordnet ist, wobei der niedrigere Druck zumindest im wesentlichen über der Waschzone vorherrscht.

6. Filter nach einem der vorhergehenden Ansprüche, dadurch gekennzeichnet, daß die Wascheinrichtung (6) in mindestens zwei getrennte Waschmittel zum Waschen in mindestens zwei Stufen geteilt ist.

7. Filter nach einem der vorhergehenden Ansprüche, dadurch gekennzeichnet, daß mindestens ein Teil des durch Kühlen im Abscheider (10) erhaltenen Kondensats zur Wascheinrichtung rezirkuliert wird.

8. Filter nach einem der vorhergehenden Ansprüche, dadurch gekennzeichnet, daß die Mittel (19, 20) zur Schaffung des Druckunterschiedes Gebläse aufweisen.

## Revendications

1. Filtre pour la filtration continue d'un liquide sous pression, comprenant une cuve (1) contenant ledit liquide jusqu'à un certain niveau et du gaz dans un espace situé au-dessus dudit liquide, au moins un élément-filtre rotatif disposé dans ladite cuve et formant un espace interne pour le liquide filtré obtenu par filtration, un dispositif de lavage (6) pour le lavage de matériau séparé du liquide et déposé sur ledit élément-filtre, une communication entre ledit espace interne dudit élément-filtre et un moyen de sortie de ladite cuve pour décharger le liquide filtré et le gaz entraîné avec lui, un séparateur (10) relié à ladite sortie pour séparer le liquide filtré et le gaz entraîné, des moyens (19, 20) pour créer la différence de pression entre l'espace de gaz de la cuve et l'espace interne de l'élément-filtre nécessaire à la filtration, lesdits moyens (19, 20) étant situés à l'extérieur de ladite cuve pour créer une surpression dans l'espace de gaz de la cuve (1) et une pression moins élevée dans l'espace interne dudit élément-filtre, et un conduit (18) disposé entre l'espace de gaz du séparateur (10) et l'espace de gaz de la cuve (1) pour faire recirculer le gaz jusqu'à l'espace de gaz de la cuve, dans ledit conduit de gaz (18) étant disposés lesdits moyens (19, 20) pour créer la différence de pression, caractérisé en ce que ledit moyen (19, 20) est adapté à créer une pression si faible que le liquide filtré est maintenu dans un état d'évaporation au sein du séparateur et que ladite faible pression est adaptée à la température du filtrat dans le séparateur (10) pour permettre une ébullition du liquide, et en ce que le séparateur (10) est doté d'un dispositif de refroidissement (26) pour refroidir le gaz séparé et d'un moyen de sortie (30) pour décharger le condensat obtenu par refroidissement.

2. Filtre selon la revendication 1, caractérisé en ce que ladite surpression et ladite faible pression ont sensiblement la même valeur.

3. Filtre selon la revendication 1 ou 2, caractérisé en ce que lesdits moyens (19, 20) pour créer la différence de pression sont divisés en au moins deux moyens séparés le long dudit conduit de gaz (18), au moins ledit moyen situé le plus près du séparateur (10) créant ladite faible pression dans ledit espace au sein dudit élément-filtre et le moyen suivant (20) augmentant la pression pour obtenir la surpression régnant dans l'espace de gaz de la cuve (1).

4. Filtre selon la revendication 3, caractérisé en ce que les moyens de création de pression sont disposés de manière que la pression atmosphérique règne en un point entre lesdits moyens (19, 20) pour créer la différence de pression afin d'obtenir ladite faible pression et ladite surpression, respectivement.

5. Filtre selon l'une quelconque des revendications précédentes, dans lequel ledit élément-filtre comprend au moins un filtre à disques monté sur un arbre sensiblement horizontal, caractérisé en ce que ledit dispositif de lavage (6) est adapté à laver une seule zone du filtre à disques située la plus près dudit arbre sensiblement concentriquement par rapport à celui-ci, ladite faible pression régnant au moins sensiblement sur ladite zone de lavage.

6. Filtre selon l'une quelconque des revendications précédentes, caractérisé en ce que ledit dispositif de lavage (6) est divisé en au moins deux moyens de lavage séparés pour un lavage en au moins deux phases.

7. Filtre selon l'une quelconque des revendications précédentes, caractérisé en ce qu'au moins une partie du condensat obtenu par refroidissement dans ledit séparateur (10) est mis en recirculation jusqu'au dispositif de lavage.

8. Filtre selon l'une quelconque des revendications précédentes, caractérisé en ce que lesdits moyens (19, 20) pour créer la différence de pression consistent en ventilateurs.
